# EUROPEAN PATENT APPLICATION

(11) **EP 1 248 207 A1**
(43) Date of publication of application: **09.10.2002**
(21) Application number: 01410036.6
(22) Date of filing: 03.04.2001
(51) Int. Cl.: G06F 17/30

(54) **A method of and an apparatus for obtaining user-specific information from a source database and a web resource**

(71) Applicant: Hewlett-Packard Company, Palo Alto, CA 94304 (US)
(72) Inventor: Brebner, Gavin, 38410 Saint Martin d'Uriage (FR); Lefevre, Yan, 38660 Saint Vincent de Cluze (FR)
(74) Representative: Lloyd, Richard Graham

(57) **Abstract**

A method of obtaining user-specific information from a source database, comprising
a) generating an information request
b) dispatching the information request to the source database
c) using the information request to extract information from the source database, and
d) dispatching the extracted information from the source database characterised in that
e) at least one of the information request and the extracted information, subsequent to its dispatch, is modified in accordance with user profile data.

## Description

### Description of and Background to the Invention

This invention relates to a method of and to apparatus for obtaining user-specific information from a source database and a web resource.

More specifically, although not exclusively, the invention relates to a method of and to apparatus for obtaining "personalised" information and web content from Internet resources such as the world-wide web and file transfer protocol (FTP) libraries, so that a user's browsing experience may be tailored in accordance with certain characteristics, preferences and interests (for example), which are peculiar to the user and/or in accordance with the configuration and specification (for example) of the client application being used.

Previous attempts to personalise users' browsing experiences have focused primarily on the use of so-called cookies - in essence, messages stored by the client application (such as a web browser) and which are passed to the server side of the system whenever the browser requests information (such as a web page) from the server concerned.

However, although the use of cookies is effective, in some cases, to expedite the browsing experience, in that, for example, repeated form-filling can be avoided, the use of such client-side information - which can be stored for very long periods of time on the browser concerned - gives rise to serious privacy concerns, as the user/client data provided by the cookie must inevitably be exposed to the server whenever an information request is dispatched by the client application.

An alternative solution which has been proposed involves the use of series of automated commands such as scripts which can be run by the server or database provider in order to elicit personal or user-specific information which can then be used to filter (i.e. reduce in volume) the information extracted from the database concerned.

Proxy servers have also been used in attempts to customise users' browsing experiences, although, until now, their function has been rather limited, in that they have performed little more than a "filtering" role, by, for example, allowing access to specific web pages only, or by denying access to other predetermined sites.

It is accordingly an object of the present invention to provide a method of obtaining user specific information from a source database and a web resource, which overcomes or at least alleviates these shortcomings.

It is also an object of the present invention to provide apparatus which allows this to be achieved.

### Summary of Invention

According to a first aspect of the present invention, there is provided a method of obtaining user-specific information from a source database, comprising
a) generating an information request,
b) dispatching the information request to the source database,
c) using the information request to extract information from the source database, and
d) dispatching the extracted information from the source database
   characterised in that
e) at least one of the information request and the extracted information, subsequent to its dispatch, is modified in accordance with user profile data.

The information request and the extracted information may be routed or channelled through a modification module, the modification module preferably being arranged to receive the user profile data from a user profile database.

In this way, the information request and/or the extracted information may be modified - i.e. "tailored" - in accordance with data obtained from the user profile database.

It will be appreciated by those well-versed in the relevant art that the term "profile" can be used not only to refer to characteristics which are peculiar to the user - such as the user's nationality and interests - but also to refer to various aspects of the client application and hardware, such as, for example, the version and configuration of the web browser being used.

It will therefore be understood that the present invention allows client-side modification of the information request or extracted information to be effected, in accordance with a wide variety of different criteria, thus allowing a high degree of user personalisation to be obtained.

The information request is preferably generated in a web browser and may be dispatched, via a web server, to a web page, the modification thus conveniently being effected by a proxy server in communication with the user profile database, such that the modifications are not visible to the web server.

From this, it will be apparent that the modification is client-side, in that the web server - and hence also parties having an interest in or access to the web server - is unaware that modification of the incoming information request and/or the outgoing extracted information has occurred.

As a result, the present invention provides a far greater degree of security than prior proposals which, for example through the use of cookies, have inevitably exposed some private data to non-trusted sources such as the web server concerned.

Preferably, prior to dispatching the information request, the user may elect whether or not modification is to occur.

This election, which may be effected by appropriate completion of a pop-up window or prompt box, allows the user to disable the modification step where, for example, the source database is being accessed on behalf of another user, or, perhaps, where information is required that the user knows or suspects is likely to lie beyond the remit of that user's particular profile.

As it is envisaged that a plurality of users' profiles may be stored within the user profile database, the information request may be provided with an identifier which distinguishes the user or client from other users or clients, the identifier being used by the modification module to extract the appropriate user profile data and thus to allow the user-specific modification to be effected.

The identifier may include, for example, details of the client application or browser, details of the unit or PC running the client application or browser, and, if applicable, details of the network location of the user or client application.

From this, it will be appreciated that the user profile data extracted from the user profile database for the purpose of effecting the modification, may be highly user-specific, in that only profile data peculiar to the user making the information request is passed to the modification module to effect the modification.

The user profile data may include information on at least one of users' nationalities, preferences, interests and responsibilities.

Whilst the user profile data may conceivably be stored within the user profile database in a number of differing formats, it is envisaged by the applicants that the user profile data may conveniently be stored as part of an XML file, XML being particularly well suited to the inclusion, in data files, of customised tags and headers. This, it will be appreciated, enables a user's profile data to be divided into a number of discrete data fields.

In accordance with a further aspect of the present invention, there is provided a method of obtaining user-specific information from a web resource, comprising:
a) generating an information request,
b) dispatching the information request to the web resource via a web server,
c) using the information request to extract information from the web resource, and
d) dispatching the extracted information from the web resource
   characterised in that
e) at least one of the information request and the extracted information, subsequent to its dispatch, is modified in accordance with user profile data.

The modification may be effected by a proxy server in communication with a user profile database.

The invention, in its second aspect, may comprise one or more of the features described in relation to the first aspect of the invention.

In accordance with a third aspect of the present invention, there is provided apparatus for obtaining user-specific information from a source database comprising
a) an information request generation module,
b) an information request dispatch module,
c) a user profile database, and
d) a modification module, operatively associated with the information request dispatch module, the modification module being arranged to receive information extracted from the source database and to modify at least one of the information request and the extracted information in accordance with user profile information received from the user profile database.

In accordance with a fourth aspect of the present invention, there is provided apparatus for obtaining user-specific information from a web resource comprising
a) an information request generation module,
b) an information request dispatch module,
c) a user profile database, and
d) a modification module, operatively associated with the information request dispatch module, the modification module being arranged to receive information extracted from the web resource and to modify at least one of the information request and the extracted information in accordance with user profile information received from the user profile database.

The information request generation module and/or the information request dispatch module may be provided as part of a web browser application.

Preferably, the modification module comprises a proxy server in communication with the user profile database such that the modifications are not visible to a web server associated with the web resource.

### Brief Description of the Drawings

The invention, in its various aspects, will now be described in greater detail, but strictly by way of example only, by reference to the accompanying drawings, of which
Figure 1 is a schematic illustration of the invention, in its first and third aspects, and
Figure 2 is a schematic illustration of the invention in its second and
fourth aspects.

### Best Mode of the Invention

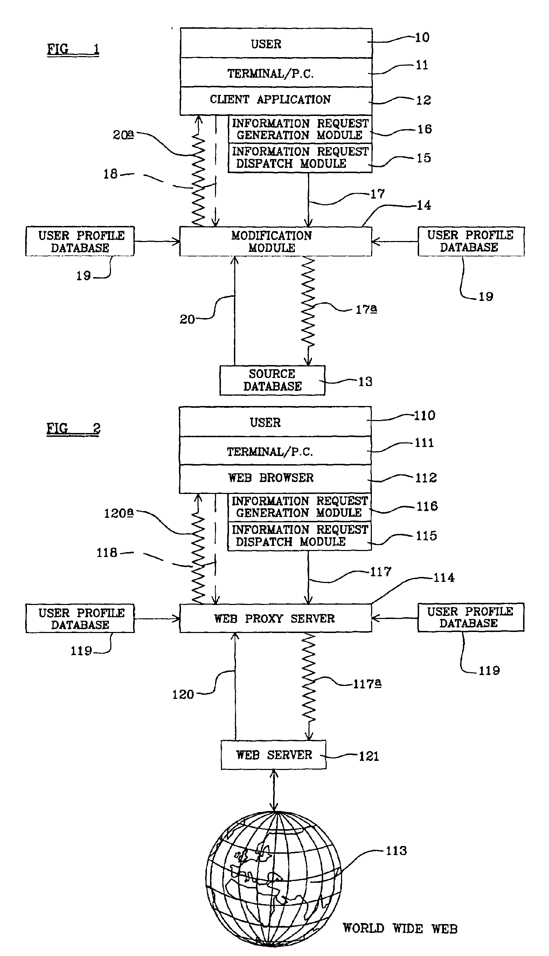

Referring first to Figure 1, this shows, in schematic form, the relationship between a user 10, running a client application 12 on a terminal or PC 11, and a source database 13, where the source database 13 contains information sought by the user 10.

As will be appreciated by those skilled in the art, many user/database relationships are direct, in that an information request sent by the user is passed straight to the database concerned, so that the information sought may be extracted from the database and passed back to the user.

However, as shown by Figure 1, the relationship between the user 10 and the source database 13 in accordance with the present invention is not direct, in that a modification module 14 is provided between the two. The modification module 14 is operatively associated with an information request dispatch module 15, which in turn is in communication with an information request generation module 16 in which information requests 17 are generated, in response to commands input to the terminal/PC 11 by the user 10.

As can be seen, the request 17 is dispatched from the information request dispatch module 16 to the modification module 14, the modification module 14 thus having an opportunity to intercept - and modify, if applicable - the request 17 prior to it being forwarded to the source database 13.

If the user 10, through the input of appropriate commands to the terminal/PC 11, has elected to enable the modification module 14, an enable signal 18 is sent, simultaneously with or in advance of the information request 17, to the modification module 14.

The modification module 14, in accordance with the particular enable instruction sent, then operates in one of two ways.

First, if modification of the outgoing information request is required, information is extracted by the modification module 14 from a user profile database 19, the information received from the user profile database 19 being used to modify - i.e. personalise - the information request 17, thus resulting in a modified information request 17a which is then passed to the source database 13. The user profile database 19 includes information on a plurality of users, the information including, for example, the users' nationalities, preferences, interests and responsibilities. Thus, the information request 17 can be tailored in accordance with one or more of these criteria. For example, where the information sought by the information request 17 is available from the source database 13 in a number of different languages, the modification module 14, in response to user nationality information received from the profile database 19, may modify the information request 17 to produce a modified information request 17a which is effective only to seek information from the source database 13 in a language which the user 10 will be able to understand.

Similarly, should the information sought by the information request 17 relate, for example, to sporting events taking place on a given day, the modification module 14, acting in response to "sports preference" information received from the user profile database 19, may modify the request to produce a modified request 17a, which is effective only to elicit sports information from the source database 13 that is likely to be of interest to the user 10.

This "outward" modification has the advantage of expedience, in that narrowly specified information can be sought from the source database 13, thus reducing the amount of irrelevant information - and hence data traffic - passing between the modification module 14 and the source database 13.

However, for greater privacy, the user 10 may also elect for the data modification to be effected in an "inbound" manner.

Thus, instead of modifying the information request 17 to produce a modified outgoing information request 17a, "raw", unmodified information 20 may be returned from the source database 13 for "inbound" modification by the modification module 14. In this scenario, user profile data is extracted from the user profile database as and when the unmodified information is received by the modification module 14, so that the raw information may be tailored, or personalised, in accordance with the user's profile. This, as shown in Figure 1, gives rise to modified extracted information 20a which is dispatched by the modification module 14 back to the client application 12 and hence to the user 10.

By modifying the extracted information "downstream" of the source database, it will be appreciated that the modifications are effectively kept invisible from the source database 13, and indeed from any other users or modules in communication with the source database 13. Thus, although "inbound" modification of this type may result in slower operation than its "outbound" counter-part, as a relatively large amount of incoming information 20 must be modified, it does offer advantages from a security and personal privacy point of view.

So that the modification module 14 receives information from the user profile database 19 that is peculiar to the user 10, the information request 17 includes an identifier which identifies the user 10 and/or the terminal/PC 11 and client application 12 to the user profile database 19. In this way, information relating solely to the user 10 can be extracted from the user profile database 19, to ensure that the modification effected in the modification module 14 tailors the outgoing information request or the incoming information 20 in accordance with that user's specific profile.

In this way, a plurality of different users may each have access to a common modification module 14, the user profile database 19 supplying user profile data specific to the various users as they each generate information requests of differing types.

However, for greater user privacy, it will be appreciated that it may in fact be desirable to minimise the number of different users having access to the modification module. Thus, it may in fact be convenient for a plurality of local modification modules to be used, each local modification module being associated - and hence in communication with - just one user. In this way, the modification may be effected even further towards the client side, thus reducing accessibility to the user's profile data to third parties.

Referring next to Figure 2, this shows a somewhat similar arrangement to that shown in Figure 1, although the various components shown in Figure 2 are configured specifically to provide web access to the user concerned.

For convenience, those parts of the arrangement shown in Figure 2 which correspond with those shown in Figure 1 are numbered similarly, but with the addition of 100.

Thus, a user 110 wishing to obtain user-specific information from a web resource provided on the world-wide web 113 generates an information request 117 in an information request generation module 116 which is then dispatched to a web proxy server 114 by an information request dispatch module 115.

The web proxy server 114, if so requested by an enable signal 118, modifies the outgoing request 117 in accordance with user profile data received from a user profile database 119.

In a manner analogous to that described in relation to Figure 1, this produces a modified information request 117a which is dispatched to a web server 121 which fetches pages from the world-wide web 113 and serves them back to the web proxy server 114.

Thus, during such "outbound" request modification, the initial request 117 is tailored or personalised in accordance with the user profile data received from the user profile database 119 to produce a more specific modified request 117a. As an example, if the initial request 117 were to obtain information on a group of companies from their group web page located somewhere on the world-wide web 113, the user profile modification may, for example, be effective to modify - or redirect - the request so that only web pages in a language understandable by the user will be sought by the modified request 117a. Thus, the web proxy server 114, acting in accordance with the user profile data received from the user profile database 119, may redirect the original request 117 by modification of the requested URL of the web page concerned so that only pages in, for example, the English language are fetched.

As the profile of a user can be made up from an almost limitless number of differing criteria, it will be appreciated that the degree of modification which the web proxy server is able to effect is vast, meaning that a very great amount of personalisation can be imparted to the original request 117 before it is actually passed to the web server 121 which then fetches and serves the pages concerned from the world-wide web 113. Although the situations in which this could prove beneficial are very great in number, it is envisaged that particular advantages could perhaps be obtained during web searches, by effectively adding a further "screen" to the search request before it is sent to the server 121. Thus, where a user wishes to obtain information on the development, say, of web proxy servers, the request 117 could be modified so as to exclude any web pages belonging to that user's employer, as such information is likely already to be known by the user.

As a more specific example, should the user 110 be an employee of Hewlett Packard, desirous of obtaining information on such proxy servers, the initial request 117 could be modified in accordance with user profile data received from the user profile database 119 (which would include the user's employer and location of employment), thus specifying, in the modified request 117a, that pages from the hp.com website are not desired.

Should "inbound" modification be required, an appropriate "enable" signal 118 is sent to the proxy server 114, which, on the one hand, allows the outgoing request 117 to pass unmodified to the web server 121, but on the other hand, instructs the proxy server 114 to modify the incoming information 120 in accordance with information received from the user profile database 119.

Thus, as an example, the web proxy server 114 could be instructed to reformat HTML or XML web documents in accordance with a user's preferences, or, for example, to initiate automatic translation of any incoming information 120 that it not likely to be understood by the user 110.

Further, the incoming information could conceivably be re-ordered, by use of embedded HTML meta-tags or XML tags, in accordance with the user's preference.

Whichever modification option is selected by the user (outbound, inbound or perhaps a combination of two), it will be appreciated that the present invention allows for a degree of user specification to be imparted to a database extraction method which, hitherto, has not been possible.

Moreover, the fact that the user profile data is not made visible to the source database (or web server) means that the system is able to operate with a high degree of security, in that the user profile data is never revealed to the non-client side of the modification module.

Furthermore, the system is inherently flexible, in that modifications made to the contents of the user profile database may immediately be used by the modification module/web proxy server to personalise the data obtaining operation, in the manner previously described.

Finally, it will be understood by those skilled in the art that although the specific examples contained within this specification have shown the data modification module to be hardware based, it is envisaged by the applicants that the modification modules could equally (or perhaps in addition) be software based, residing, for example, on the local user device, conveniently as part of the browser application.

In the present specification "comprise" means "includes or consists of" and "comprising" means "including or consisting of"'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of obtaining user-specific information from a source database, comprising
a) generating an information request
b) dispatching the information request to the source database
c) using the information request to extract information from the source database, and
d) dispatching the extracted information from the source database
**characterised in that**
e) at least one of the information request and the extracted information, subsequent to its dispatch, is modified in accordance with user profile data.

2. A method according to Claim 1 wherein the information request and the extracted information are routed through a modification module, the modification module being arranged to receive the user profile data from a user profile database.

3. A method according to Claim 2 wherein the information request is generated in a web browser and dispatched, via a web server, to a web page, the modification being effected by a proxy server in communication with the user profile database, such that the modifications are not visible to the web server.

4. A method according to any of Claims 1 to 3 wherein, prior to dispatching the information request, the user may elect whether or not the modification is to occur.

5. A method according to any of Claims 2 to 4 wherein the information request is provided with an identifier which distinguishes the user or client from other users or clients, the identifier being used by the modification module to extract the appropriate user profile data and thus to allow the modification to be effected.

6. A method according to any one of the preceding claims wherein the user profile data includes information on at least one of users' nationalities, preferences, interests and responsibilities.

7. A method of obtaining user-specific information from a web resource, comprising
a) generating an information request
b) dispatching the information request to the web resource via a web server
c) using the information request to extract information from the web resource, and
d) dispatching the extracted information from the web resource
**characterised in that**
e) at least one of the information request and the extracted information, subsequent to its dispatch, is modified in accordance with user profile data.

8. A method according to Claim 7 wherein the modification is effected by a proxy server in communication with a user profile database.

9. Apparatus for obtaining user-specific information from a source database comprising
a) an information request generation module
b) an information request dispatch module
c) a user profile database, and
d) a modification module, operatively associated with the information request dispatch module, the modification module being arranged to receive information extracted from the source database and to modify at least one of the information request and the extracted information in accordance with user profile information received from the user profile database.

10. Apparatus for obtaining user-specific information from a web resource comprising
a) an information request generation module
b) an information request dispatch module
c) a user profile database, and
d) a modification module, operatively associated with the information request dispatch module, the modification module being arranged to receive information extracted from the web resource and to modify at least one of the information request and the extracted information in accordance with user profile information received from the user profile database.

11. Apparatus according to Claim 10 wherein the information request generation module and/or the information request dispatch module is provided as part of a web browser application.

12. Apparatus according to Claim 10 or Claim 11 wherein the modification module comprises a proxy server in communication with the user profile database in such a manner that the modifications are not visible to a web server associated with the web resource.
